(19) Europäisches Patentamt

European Patent Office

Office européen des brevets

(11) Veröffentlichungsnummer: **0 209 079 B1**

(12) **EUROPÄISCHE PATENTSCHRIFT**

(45) Veröffentlichungstag der Patentschrift: **13.05.92**

(21) Anmeldenummer: **86109394.6**

(22) Anmeldetag: **09.07.86**

(51) Int. Cl.⁵: **H04K 1/00**

(54) **Verfahren zur Durchführung eines verschlüsselten Funkverkehrs.**

(30) Priorität: **12.07.85 DE 3524941**

(43) Veröffentlichungstag der Anmeldung:
**21.01.87 Patentblatt 87/04**

(45) Bekanntmachung des Hinweises auf die
Patenterteilung:
**13.05.92 Patentblatt 92/20**

(84) Benannte Vertragsstaaten:
**AT CH DE FR GB IT LI NL SE**

(56) Entgegenhaltungen:
**EP-A- 0 063 332**
**US-A- 3 808 365**
**US-A- 4 245 346**

(73) Patentinhaber: **SIEMENS AKTIENGESELL-
SCHAFT**
**Wittelsbacherplatz 2**
**W-8000 München 2(DE)**

(72) Erfinder: **Hanni, Manfred, Ing. (grad.)**
**Gottschalkstrasse 3**
**W-8039 Puchheim(DE)**
Erfinder: **Rittenauer, Bodo, Dipl.-Math.**
**Arnriederstrasse 1**
**W-8000 München 71(DE)**

## Beschreibung

Technisches Gebiet

Die Erfindung bezieht sich auf ein Verfahren zur Durchführung eines verschlüsselten Funkverkehrs zwischen Sende-Empfangsstationen, insbesondere mobilen Sende-Empfangsstationen, bei dem sämtliche gemeinsam ein Funknetz bildenden Sende-Empfangsstationen den gleichen Tagesschlüssel verwenden sowie zeitsynchron arbeiten.

Zugrundeliegender Stand der Technik

Bei Betrieb von Funknetzen, insbesondere bei Funknetzen für taktischen Einsatz, ist es wichtig, daß einerseits die zu übermittelnde Information nur dem zugänglich ist, der hierzu berechtigt ist und darüber hinaus auch dafür gesorgt wird, daß keine unberechtigte Sende-Empfangsstation durch gezielte Funkmaßnahmen den Funkverkehr stören bzw. durch die Übertragung von Falschinformationen Verwirrung stiften kann.

Um eine hohe Geheimhaltung der zu übertragenden Information zu erreichen, ist es, wie beispielsweise die Literaturstelle DE-OS 21 6O 132 zeigt, üblich, die Informationen auf der digitalen Ebene zu übertragen und die digitale Information in geeigneter Weise mit einer Schlüsselsignalfolge zu verschlüsseln. Um hierfür einen geordneten Funkverkehr zu ermöglichen, müssen die einzelnen Sende-Empfangsstationen sowohl den gleichen Tagesschlüssel verwenden als auch zeitsynchron arbeiten. Üblicherweise wird, wie das die genannte Literaturstelle ausweist, bei der Übertragung einer Information von einer sendenden Station zu einer empfangenden Station die Schlüsselsignalfolge jeweils aus der Uhrzeit, einer Codenummer und dem Tagesschlüssel abgeleitet und zu Beginn der verschlüsselten Übertragung eine zeitabhängige Synchronisier- und Kennungsinformation übertragen.

Bewegt sich der zulässige gegenseitige Zeitversatz der eine Verbindung miteinander wünschenden Stationen in ausreichend kleinen Grenzen, dann genügt anstelle einer Synchronisierinformation eine Zeitzeicheninformation, beispielsweise in Form eines Barkercodes, um den gewünschten Synchronismus herzustellen, die Voraussetzung dafür ist, daß eine empfangende Station die ihr von der sendenden Station übersandte Kennungsinformation aufnehmen kann. Der gerätetechnische Aufwand ist in diesem Fall sehr groß, weil hierbei an die Genauigkeit der Stationsuhren außerordentlich hohe Anforderungen gestellt werden müssen. Außerdem ist die erforderliche, äußerst präzise Erstsynchronisation der Stationsuhren aller Sende-Empfangsstationen eines Funknetzes unter üblichen Umweltbedingungen nur mit erheblichem Zeitaufwand zu erreichen.

Ist dieser hohe technische Aufwand unerwünscht, und sollen die Sende-Empfangsstationen hinsichtlich ihrer Stationsuhren mit preiswerten Quarzen auskommen, dann müssen beim Verbindungsaufbau mitunter erhebliche Zeitdifferenzen zwischen den eine Verbindung miteinander wünschenden Stationen überwunden werden. Hierzu dient dann eine umfangreiche Synchronisierinformation, die die nötigen Zeitangaben der empfangenden Station von der sendenden Station übermittelt. Diese Synchronisierinformation wird unverschlüsselt übertragen und ist im allgemeimen mit Rücksicht auf die zu fordernde Übertragungssicherheit relativ lang, was vor allem bei niedrigen Funkbitraten zu unzulässig langen Aufbauzeiten führt. Wird zudem nicht von einer realzeitgesteuerten Verschlüsselung Gebrauch gemacht, dann wird der Umfang der Synchronisierinformation noch durch die speziellen Startangaben für den Schlüsselgenerator der empfangenden Station weiter vergrößert.

Offenbarung der Erfindung

Der Erfindung liegt die Aufgabe zugrunde, für ein Verfahren zur Durchführung eines verschlüsselten Funkverkehrs der einleitend beschriebenen Art unter Anwendung einer realzeitgesteuerten Verschlüsselung eine weitere Lösung anzugeben, die einen schnellen Verbindungsaufbau mit hoher Sicherheit gegen mißbräuchliches Eindringen eines Störers zwischen zwei eine Verbindung wünschenden Sende-Empfangsstationen ermöglicht und zwar unter Berücksichtigung erheblicher, hierbei zu korrigierender Zeitdifferenzen zwischen den Stationsuhren dieser beiden Sende-Empfangsstationen.

Diese Aufgabe wird gemäß der Erfindung durch die im Patentanspruch 1 angegebenen Merkmale gelöst.

Bei realzeitgesteuerter Verschlüsselung wird, um einen hohen Geheimhaltungsgrad der zu übertragenden Information zu gewährleisten, der unter anderem von der Stationsuhrzeit bestimmte Zeitschlüssel in relativ kurzen Zeitabständen geändert. Der Erfindung liegt die Erkenntnis zugrunde, daß für den Verbindungsaufbau unter Wahrung der notwendigen Sicherheit gegen mißbräuchliches Eindringen bzw. den Schutz der hierbei zu übertragenden Information mit einer wesentlich geringeren Schlüsselvielfalt ausgekommen wird, als dies bei der eigentlichen Nutzsignalübertragung erforderlich ist. Dies ermöglicht ein zweistufiges Verfahren, bei dem die Gültigkeit des Zeitschlüssels in der Aufbauphase der Verbindung um ein Vielfaches länger als in der Nutzinformationsübertragungsphase ist.

Die längere Gültigkeit des Zeitschlüssels während der Aufbauphase der Verbindung hat nun den großen Vorteil, daß die von der rufenden Stationen übertragene Information auf der gerufenen Station in einem weit größeren Zeit-Toleranzbereich detektiert werden kann, als dies bei wesentlich kürzerer Gültigkeitsdauer des Zeitschlüssels, wie sie bei der eigentlichen Nutzinformationsübertragung zur Anwendung kommen muß, der Fall wäre.

Zweckmäßige Ausgestaltungen des Verfahrens nach der Erfindung sind in den weiteren Patentansprüchen 2 bis 6 angegeben.

## Kurze Beschreibung der Zeichnung

In der Zeichnung bedeuten die der näheren Erläuterung der Erfindung dienenden Figuren

Fig. 1 ein die Sendefunktion näher erläuterndes Teilblockschaltbild einer Sende-Empfangsstsation mit realzeitgesteuerter Verschlüsselung,

Fig. 2 ein die Funktion der Empfangsseite näher erläuterndes Teilblockschaltbild einer Sende-Empfangsstation mit realzeitgesteuerter Verschlüsselung,

Fig. 3 Zeitdiagramme zur näheren Erläuterung des Funktionsablaufs eines Verbindungsaufbaus zwischen Sende-Empfangsstationen entsprechend den Figuren 1 und 2.

## Bester Weg zur Ausführung der Erfindung

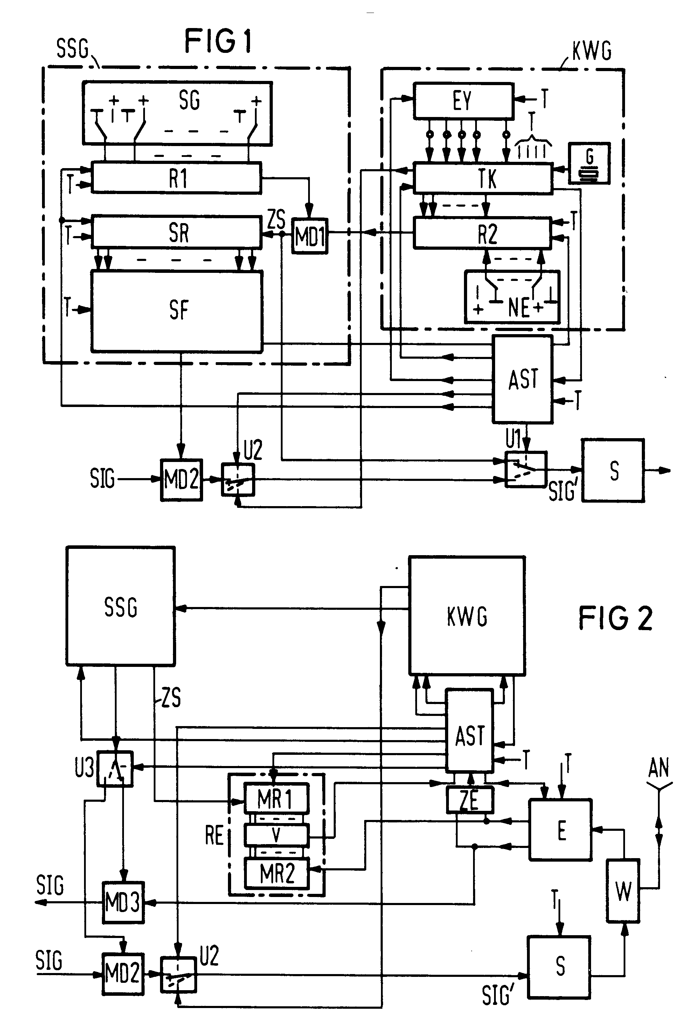

Das Teilblockschaltbild für eine Sende-Empfangsstation nach Fig. 1 weist einen Schlüsselsigsnalerzeuger SSG auf, der mit einem Kennwertgeber KWG zusammen arbeitet. Weiterhin weist das Teilblockschaltbild nach Fig. 1 einen Sender S auf, der eingangsseitig über einen Umschalter U1 wahlweise mit einem Ausgang des Schlüsselsignalerzeugers SSG und über einen weiteren Umschalter U2 hinweg mit dem Ausgang des Mischers MD2 verbunden ist, dem eingangsseitig das unverschlüsselte digitale Nutzsignal SIG zugeführt wird. Der Schlüsselsignalerzeuger SSG, der Kennwertgeber KWG, und die Umschalter U1 und U2 werden gemeinsam von der Ablaufsteuerung AST in ihrem Funktionsablauf gesteuert.

Der Schlüsselsignalerzeuger SSG weist einen Grundschlüsselgeber SG auf, in dem der bzw. die Tagesschlüssel gespeichert sind. An den Grundschlüsselgeber SG schließt sich das Tagesschlüsselregister R1 an, in das der jeweils verwendete Tagesschlüssel übernommen wird und nach Bedarf abgerufen werden kann. Weiterhin weist der Schlüsselsignalerzeuger SSG den Schlüsselrechner SR auf, dem eingangsseitig über den Mischer MD1, der wie der Mischer MD2 beispielsweise ein Modulo-2-Addierer sein kann, ein Mischsignal aus dem Tagesschlüssel und dem vom Kennwertgeber KWG gelieferten Signal zugeführt wird. Aus diesem, den eigentlichen Zeitschlüssel ZS darstellenden Signal generiert der Schlüsselrechner SR die Schlüsselsignalfolge, die dem ihm nachgeschalteten Schlüsselfolgespeicher SF zugeführt wird.

Der Kennwertgeber KWG weist eine Taktzentrale TK auf, die einerseits den Takt T für die verschiedenen Baugruppen liefert und darüber hinaus eine Stationsuhr aufweist, deren Genauigkeit durch die Schwingung des Quarzgenerators G bestimmt ist. Die Taktzentrale TK ist zur Einstellung der Stationsuhr mit einer von der Ablaufsteuerung AST gesteuerten Stationsuhr-Einstellvorrichtung EV verbunden. Die jeweilige Uhrzeit wird in digitaler Form von der Taktzentrale TK jeweils an den ihr nachgeschalteten Kennwertspeicher R2 abgegeben. Der Kennwertspeicher R2 ist außerdem mit einem einstellbaren Codenummerngeber NE verbunden, dessen eingestellte Codenummer ebenfalls in den Kennwertspeicher R2 eingespeichert wird. Das vom Kennwertgeber KWG abgegebene Signal aus dem Kennwertspeicher R2 an den Mischer MD1 besteht somit jeweils aus der Stationsuhrzeit und einer Codenummer. Die Codenummer kann hierbei die Teilnehmernummer einer Sende-Empfangsstation oder aber eine Sammelrufnummer für mehrere Sende-Empfangsstationen sein, mit denen eine Verbindung hergestellt werden soll.

Im Ruhebetriebszustand sind sämtliche zu einem Funknetz gehörenden Sende-Empfangsstationen empfangsbereit und weisen alle denselben Tagesschlüssel auf. Die im Schlüsselsignalerzeuger SSG im Rhythmus der Wechselperiode des Zeitschlüssels ZS erzeugte Schlüsselfolge, die im Schlüsselfolgespeicher SF jeweils abgespeichert wird, vollzieht sich in einem Langzeitmodus (Langzeitschlüssel Li) der hier für einen Verbindungsaufbau vorgesehen wird. Der Kennwertspeicher R2 des Kennwertgebers KWG erhält dabei vom Codenummerngeber NE die eigene Teilnehmernummer bzw. eine Sammelrufnummer.

Wünscht nun eine Sende-Empfangsstation eine Verbindung mit einer Teilnehmerstation oder eine Verbindung mit mehreren Teilnehmerstationen über einen Sammelruf, dann wird zunächst der Codenummerngeber NE auf die Nummer des gewünschten Teilnehmers bzw. auf die Sammelrufnummer für mehrere Sende-Empfangsstationen eingestellt und im Rhythmus der Wechselperiode des Zeitschlüssels ZS im Langzeitmodus ein entsprechender Zeitschlüssel am Ausgang des Mischers MD1 erzeugt. Dieser Zeitschlüssel ZS kann, da er ja bereits die Nummer des gewünschten Teilnehmers beinhaltet, unmittelbar als verschlüsselte Rufadresse ausgesendet werden. Der Zeitschlüssel ZS wird hierbei vom Ausgang des Mischers MD1 über den Umschalter U1 in der in unterbrochener Linie dargestellten Schaltstellung dem Sender S zugeführt. Wegen der langen Gültigkeit des Langzeitschlüssels kann die so gebildete verschlüsselte Rufadresse auf der gerufenen Station noch in einem relativ großen Zeit-Toleranzbereich detektiert werden. Sobald die gerufene Station die Rufadresse erkannt und abhängig hiervon ihre Stationsuhr in Synchronismus mit der Stationsuhr der rufenden Station gebracht hat, kann dann durch Umschalten auf die wesentlich kürzere Wechselperiode des Zeitschlüssels ZS im Kurzzeitmodus (Kurzzeitschlüssel Kiv) umgeschaltet und unter Anwendung dieses Kurzzeitschlüssels die eigentliche Nutzsignalübertragung durchgeführt werden.

Empfang und Auswertung der verschlüsselten Rufadresse soll anhand des Teilblockschaltbildes nach Fig. 2 noch näher erläutert werden. Im Teilblockschaltbild nach Fig. 2 sind der Schlüsselsignalerzeuger SSG und der Kennwertgeber KWG lediglich als einfache Blöcke dargestellt. Die ankommende verschlüsselte Rufadresse wird über die Antenne AN, und die Sende-Empfangsweiche W dem Empfänger E zugeführt, der seinerseits ebenfalls von der Ablaufsteuerung AST gesteuert wird. Die Ablaufsteuerung AST veranlaßt, daß sowohl der auf dieser Sende-Empfangsstation erzeugte Langzeitschlüssel als auch die empfangene verschlüsselte Rufadresse dem Rufempfänger RE zugeführt werden. Der Rufempfänger RE besteht aus zwei Schlüsselspeichern MR1 und MR2 in Form von Registern sowie einem mit den Schlüsselspeichern verbundenen Vergleicher V, von denen in den Schlüsselspeicher MR1 der örtliche Zeitschlüssel ZS im Langzeitmodus und in den Schlüsselspeicher MR2 die ebenfalls einen Zeitschlüssel ZS im Langzeitmodus darstellende empfangene verschlüsselte Rufadresse eingespeichert werden. In Abhängigkeit des Vergleicherergebnisses wird über die Ablaufsteuerung AST der örtliche Zeitschlüssel im Schlüsselspeicher MR1 solange bitweise verschoben, bis der Vergleicher V der Ablaufsteuerung AST die zeitliche Übereinstimmung der in den beiden Schlüsselspeichern MR1 und MR2 eingespeicherten Zeitschlüssel meldet. In Abhängigkeit von dieser Meldung stellt die Ablaufsteuerung AST die Stationsuhr des Kennwertgebers KWG über die Stationsuhr-Einstellvorrichtung EV so nach, daß zwischen der rufenden Sende-Empfangsstation und der gerufenen Sende-Empfangsstation Synchronismus besteht. Sodann kann über eine Rückinformation der gerufenen Sende-Empfangsstation zur rufenden Sende-Empfangsstation eine Information, beispielsweise eine Startinformation übertragen werden, von der abhängig dann über die Ablaufsteuerung AST die Umschaltung vom Langzeitschlüssel auf den Kurzzeitschlüssel vollzogen werden kann.

Beim Ausführungsbeispiel nach Fig. 2 kann dies dadurch geschehen, daß diese Information vom Kennwertgeber KWG generiert und durch Umschalten des Umschalters U2 in die gestrichelt gezeichnete Schaltstellung vom Kennwertgeber KWG dem Sender S zur Abstrahlung von der Antenne A über die Sende-Empfangsweiche erfolgen kann. In der dargestellten Schaltstellung des Umschalters U2 nach den Figuren 1 und 2 kann das anstehende digitale Nutzsignal SIG über den Mischer MD2 hinweg als verschlüsseltes digitales Signal SIG' dem Sender S zugeführt werden.

Für die Durchführung eines Verbindungsaufbaus kann der die verschlüsselte Rufadresse darstellende Zeitschlüssel ZS auch mit jeder während seiner Gültigkeit vorgenommenen Wiederholung gleichzeitig mit einer Zeitinformation versehen werden. Beim Teilblockschaltbild nach Fi. 1 kann dies dadurch vorgenommen werden, daß im Anschluß an die Ausgabe eines Zeitschlüssels ZS an den Eingang des Senders S kurzzeitig die Umschalter U1 und U2 in die gestrichelte Schaltstellung gebracht werden, in der dann der verschlüsselten Rufadresse eine Zeitinformation von der Taktzentrale TK beigefügt werden kann. Beträgt die Wechselperiode für den Kurzzeitschlüssel ein ganzes Vielfaches der Wechselperiode des Langzeitschlüssels und ist die aus der Zeitinformation und der verschlüsselten Rufadresse bestehende Rufinformation i,A zeitlich auf eine Wechselperiode des Kurzzeitschlüssels beschränkt, dann wird die Zeitinformation zweckmäßigerweise darin bestehen, welchem Kurzzeitschlüssel die zeitliche Lage der jeweiligen Rufinformation in der Aufeinanderfolge von Kurzzeitschlüsseln innerhalb einer Wechselperiode des Langzeitschlüssels entspricht.

Diese Zeitinformation kann, wie im Teilblockschaltbild nach Fig. 2 angedeutet ist, dem Empfänger E über den Zeitinformationsempfänger ZE der Ablaufsteuerung AST unmittelbar zugeführt werden und auch die Aufeinanderfolge der Zeitinformationen in den sich wiederholenden Rufinformationen für die Ableitung der Startinformation herangezogen werden, durch die mit Umschalten vom Langzeitschlüssel auf den Kurzzeitschlüssel auf die Übertragung der eigentlichen Nutzinformation übergegangen werden soll. Sofern im Rahmen der Übertragung der Nutzinformation ab und zu auch Zeitinformationen übertragen werden sollen, können diese ebenfalls über den Zeitinformationsempfänger ZE am zweiten Ausgang des Empfängers E abgenommen und über den Zeitinformationsempfänger ZE der Ablaufsteuerung AST zugeführt werden.

Das am zweiten Ausgang des Empfängers E ankommende verschlüsselte digitale Nutzsignal SIG' wird im Mischer MD3, der beispielsweise ebenfalls ein Modulo-2-Addierer sein kann, entschlüsselt und das entschlüsselte digitale Nutzsignal SIG an seinem Ausgang für seine weitere Verarbeitung bereitgestellt.

Wie das Teilblockschaltbild nach Fig. 2 noch weiter erkennen läßt, ist der die Schlüsselfolge abgebende Ausgang des Schlüsselsignalerzeugers SSG über den Umschalter U3 wahlweise an den Mischer MD2 und an den Mischer MD3 anschaltbar. Je nachdem, ob die betreffende Sende-Empfangsstation im Sende- oder im Empfangsbetrieb arbeitet, wird der Umschalter U3 in die gestrichelte oder in die ausgezogene Schaltstellung von der Ablaufsteuerung AST übergeführt. Sofern ein echter Duplexbetrieb durchgeführt werden soll, kann auch der Umschalter U3 enfallen und die Mischer MD2 und MD3 unmittelbar mit dem die Schlüsselfolge liefernden Ausgang des Schlüsselsignalerzeugers SSG verbunden werden.

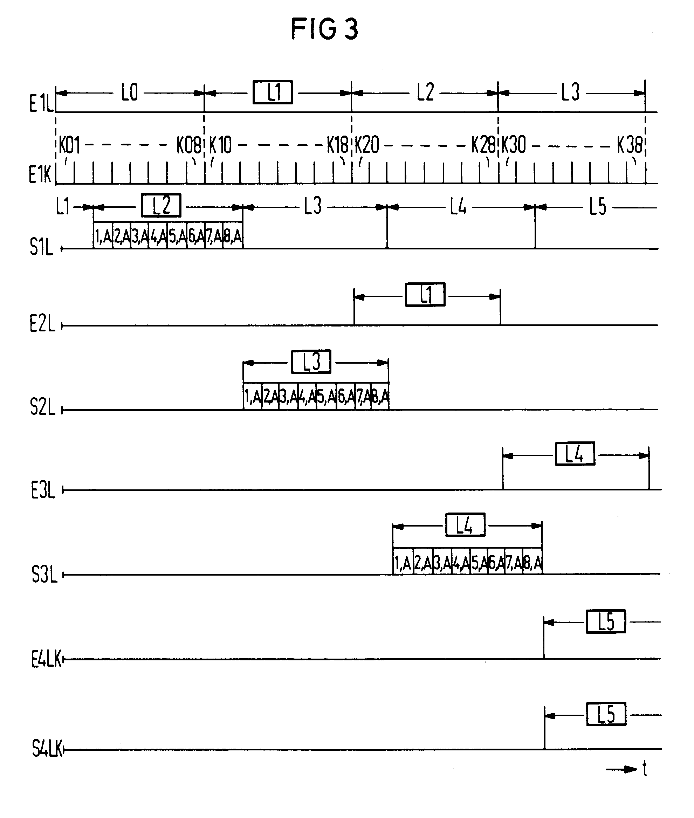

Anhand der in Fig. 3 dargestellten Zeitdiagramme soll nun die Wirkungsweise eines Verbindungsaufbaus noch näher erläutert werden, bei dem angenommen ist, daß die Zeitdifferenz zwischen der Stationsuhr der rufenden Sende-Empfangsstation und der Stationsuhr der gerufenen Sende-Empfangsstation größer ist als eine Wechselperiode des Zeitschlüssels im Langzeitmodus.

Das oberste Zeitdiagramm E1L zeigt über der Zeit die im Rhythmus einer Wechselperiode von der gerufenen Sende-Empfangsstation erzeugten Langzeitschlüssel LO, L1, L2 und L3. Die Wechselperiode des Langzeitschlüssels erstreckt sich über acht Wechselperioden des Langzeitschlüssels. Die den Langzeitschlüsseln LO, L1, L2 und L3 zugehörigen Kurzzeitschlüssel KO1 ... KO8, K1O ... K18, K2O ... K28 und K3O ... K38 sind im Zeitdiagramm E1K dargestellt. In jedem durch die Periode eines Kurzzeitschlüssels dargestellten Abschnitt innerhalb der Gültigkeitsdauer eines Langzeitschlüssels LO, L1, L2 und L3 wird von der Sendeseite eine verschlüsselte Rufadresse A übertragen, der jeweils eine Zeitinformation 1, 2, 3, 4, 5, 6, 7 und 8 zugeordnet ist. Diese Zeitinformation gibt jeweils die zeitliche Lage der gerade übertragenen verschlüsselten Rufadresse bezogen auf die Wechselperioden des Kurzzeitschlüssels innerhalb der Gültigkeitsdauer eines Langzeitschlüssels an.

Im Zeitdiagramm S1L, das die Folge der aufeinander folgenden Wechselperioden der Langzeitschlüssel L1, L2, L3, L4 und L5 der rufenden Sende-Empfangsstation angibt, ist angenommen, daß gerade im Zeitintervall der Gültigkeit des Langzeitschlüssels L2 eine wiederholte Rufinformation 1,A; 2,A; 3,A; 4,A; 5,A; 6,A; 7,A und 8,A vorgenommen wird. Jede Rufinformation ist hierbei auf die Dauer einer Wechselperiode des Kurzzeitschlüssels begrenzt. Wegen der Zeitdifferenz der Stationsuhren zwischen der rufenden und der gerufenen Sende-Empfangsstation wird von der Stationsuhr der gerufenen Sende-Empfangsstation in dem Zeitraum, in dem auf der sendenden Station der Langzeitschlüssel L2 gültig ist, der Langzeitschlüssel L1 generiert. Um dies in den Zeitdiagrammen besonders zum Ausdruck zu bringen, ist dem Zeitdiagramm E1L das Bezugszeichen L1 und im Zeitdiagramm S1L das Bezugszeichen L2 umrandet. Entsprechendes gilt für die weiteren Zeitdiagramme der Fig. 3.

Die gerufene Sende-Empfangsstation versucht nun mit Hilfe des Langzeitschlüssels L1 die ankommende Rufinformation zu detektieren, was jedoch nicht gelingt. Wie das Zeitdiagramm E2L zeigt, verbleibt sie daher nach einem vorgegebenen Programm auch während der folgenden Wechselperiode, die eigentlich dem Langzeitschlüssel L2 zugeordnet ist, beim Langzeitschlüssel L1. Die rufende Sende-Empfangsstation übermittelt die Rufinformationen 1,A; 2,A; 3,A; ... 8,A nunmehr wie das Diagramm S2L zeigt, unter Anwendung des Langzeitschlüssels L3. Da auch jetzt noch keine Detektion der Rufinformation auf der gerufenen Sende-Empfangsstation möglich ist, versucht sie es bei der nächsten Wechselperiode mit dem Langzeitschlüssel L4, was im Diagramm E3L angedeutet ist. Die rufende Station hat, wie das Zeitdiagramm S3L zeigt, nunmehr ebenfalls den Langzeitschlüssel gewechselt und überträgt die Rufinformation mit dem Langzeitschlüssel L4. Nunmehr ist eine Detektion der Rufinformationen 7,A und 8,A möglich. Die gerufene Station kann nunmehr ihre Stationsuhr korrigieren und sich auf die Stationsuhr der rufenden Sende-Empfangsstation einstellen. Dieser Sachverhalt wird für die gerufene Sende-Empfangsstation im Zeitdiagramm E4LK und für die refende Station durch das Zeitdiagramm S4LK dargestellt. Beide Sende-Empfangsstationen arbeiten nun zeitgleich unter Anwendung des Langzeitschlüssels L5. Anstelle des Langzeitschlüssels L5 kann aber auch zu Beginn der dem Langzeitschlüssel L5 zugehörigen Wechselperiode schon gleich auch den Kurzzeitschlüssel umgeschaltet und mit der Übertragung der eigentlichen Nutzinformation begonnen werden.

In den Fällen, in denen ein solcher serieller Suchvorgang eine unerwünscht lange Zeit in Anspruch nimmt, können den ankommenden Rufinformationen zum Detektieren auf der empfangenden Sende-Empfangsstation neben dem hier aktuellen Langzeitschlüssel gleichzeitig auch der diesem Langzeitschlüssel unmittelbar vorausgehende und nachfolgende Langzeitschlüssel zur Verfügung gestellt werden. Hierzu ist es lediglich erforderlich, die in den Schlüsselspeicher MR2 des Rufemfängers RE nach Fig. 2 eingegebenen Langzeitschlüssel entsprechend schneller für die Übergabe an den Vergleicher auszugeben.

Natürlich kann auch bei der Übertragung der eigentlichen Nutzinformation dann von einem Zeitschlüssel im Langzeitmodus Gebrauch gemacht werden, wenn es sich dabei um Kurzinformationen handelt und dabei sichergestellt ist, daß jeder neuen zu übertragenden Kurzinformation ein anderer Langzeitschlüssel zur Verfügung steht.

## Gewerbliche Verwertbarkeit

Das Verfahren läßt sich bei mit Zeitverschlüsselung arbeitenden Funksystemen überall da anwenden, wo zur Sicherheit gegen Eindringen durch einen Störer auch bereits während der Phase des Verbindungsaufbaus eine hohe Sicherheit gegeben sein soll und wo auch unter Berücksichtigung möglicher größerer Zeit-Toleranzen zwischen den Stationsuhren der Sende-Empfangsstationen eines solchen Funksystems der Verbindungsaufbau möglichst schnell und sicher durchgeführt werden kann.

## Liste der in den Figuren der Zeichnung verwendeten Bezugszeichen

| | |
|---|---|
| SSG | Schlüsselsignalerzeuger |
| KWG | Kennwertgeber |
| SG | Grundschlüsselgeber |
| R1 | Tagesschlüsselregister |
| SR | Schlüsselrechner |
| MD1,2,3 | Mischer (Modulo-2-Addierer) |
| SF | Schlüsselfolgespeicher |
| EV | Stationsuhr-Einstellvorrichtung |
| G | Quarzgenerator |
| TK | Taktzentrale |
| R2 | Kennwertspeicher (Uhrzeit, Codenummer) |
| NE | Codenummerngeber |
| AST | Ablaufsteuerung |
| U1,2,3 | Umschalter |
| S | Sender |
| E | Empfänger |
| SIG | Digitales Nutzsignal |
| SIG' | verschlüsseltes digitales Nutzsignal |
| T | Takt |
| W | Sende-Empfangsweiche |
| AN | Antenne |
| ZE | Zeitinformationsempfänger |
| RE | Rufempfänger |
| V | Vergleicher |
| MR1,2 | Schlüsselspeicher |
| ZS | Zeitschlüssel |
| i | Zeitinformation |
| A | verschlüsselte Rufadresse |
| i,A | Rufinformation |
| Kiv | Kurzzeitschlüssel |
| Li | Langzeitschlüssel |

## Patentansprüche

1. Verfahren zur Durchführung eines verschlüsselten Funkverkehrs zwischen Sende-Empfangsstationen, insbesondere mobile Sende-Empfangsstationen, bei dem sämtliche, gemeinsam ein Funknetz bildenden Sende-Empfangsstationen den gleichen Tagesschlüssel verwenden sowie zeitsynchron arbeiten, **dadurch gekennzeichnet**, daß bei Anwendung einer realzeitgesteuerten Verschlüsselung die Sende-Empfangsstationen im Ruhebetrieb sowie während des Verbindungsaufbaus zwischen zwei Sende-Empfangsstationen von einer Wechselperiode des Zeitschlüssels im Langzeitmodus (Langzeitschlüssel Li) Gebrauch machen, die um ein Vielfaches größer ist als die bei der eigentlichen Nutzsignalübertragung verwendete Wechselperiode des Zeitschlüssels im Kurzzeitmodus (Kurzzeitschlüssel Kiv), daß ferner zur Durchführung eines Verbindungsaufbaus von der rufenden Station zwischen zwei Langzeitschlüsselwechseln wiederholt eine Rufinformation (i,A) ausgesendet wird, die wenigstens eine stets gleich verschlüsselte Rufadresse (A) beinhaltet und daß außerdem auch die einen Verbindungsaufbau zwischen wenigstens zwei Sende-Empfangsstationen abschließende Startinformation zum Umschalten vom Langzeitschlüssel (Li) auf den Kurzzeitschlüssel (Kiv) ebenfalls im Langzeitschlüssel übertragen wird.

2. Verfahren nach Anspruch 1, **dadurch gekennzeichnet**, daß die Wechselperiode des Langzeitschlüssels (Li) ein ganzes Vielfaches der Wechselperiode des Kurzzeitschlüssels (Kiv) ist.

3. Verfahren nach Anspruch 1 oder 2, **dadurch gekennzeichnet**, daß die Rufinformation (i,A) außer der verschlüsselten Rufadresse (A) noch eine Zeitinformation (i) aufweist.

4. Verfahren nach einem der vorhergehenden Ansprüche, **dadurch gekennzeichnet** , daß die Wiederholperiode der Rufinformation (i,A) gleich der Wechselperiode des Kurzzeitschlüssels (Kiv) ist.

5. Verfahren nach einem der vorhergehenden Ansprüche, **dadurch gekennzeichnet** , daß der Langzeitschlüssel (Li) zusätzlich in der Weise für die Übertragung von kurzen Nutzinformationen verwendet wird, daß jeder Nutzinformation in der Folge von Langzeitschlüsseln (Li) ein anderer Langzeitschlüssel zugeordnet wird.

6. Verfahren nach einem der vorhergehenden Ansprüche, **dadurch gekennzeichnet** , daß die verschlüsselte Rufadresse (A) der aus dem Tagesschlüssel, der Zeit sowie einer Einzelteilnehmer- oder einer Sammelteilnehmernummer gebildete Zeitschlüssel ist.

## Claims

1. Method for carrying out enciphered radio traffic between transmitting/receiving stations, particularly mobile transmitting/receiving stations, in which all transmitting/receiving stations, which together form a radio network, use the same daily cipher and operate synchronously in time, characterized in that when real-time-controlled enciphering is used, the transmitting/ receiving stations use an alternating period of the time cipher in long-term mode (long-time cipher Li) both in idle mode and during the setting up of a connection between two transmitting/receiving stations, which alternating period is greater by a multiple than the alternating period of the time cipher in short-time mode (short-time cipher Kiv) used during the actual transmitting of a useful signal, in that furthermore, for carrying out the setting up of a connection, the calling station repeatedly sends out between two long-time cipher changes call information (i,A) which contains at least one call address (A) which is always enciphered in the same manner, and in that, additionally, the start information concluding the setting up of a connection between at least two transmitting/receiving stations is also transmitted in long-time cipher for switching over from long-time cipher (Li) to the short-time cipher (Kiv).

2. Method according to Claim 1, characterised in that the alternating period of the long-time cipher (Li) is an integral multiple of the alternating period of the short-time cipher (Kiv).

3. Method according to Claim 1 or 2, characterised in that the call information (i,A) also exhibits time information (i) in addition to the enciphered call address (A).

4. Method according to one of the preceding claims, characterised in that the period of repetition of the call information (i,A) is equal to the alternating period of the short-time cipher (Kiv).

5. Method according to one of the preceding claims, characterized in that the long-time cipher (Li) is additionally used for the transmission of short useful information items, in such a manner that a different long-time cipher is allocated to each useful information item in the sequence of long-time ciphers (Li).

6. Method according to one of the preceding claims, characterised in that the enciphered call address (A) is the time cipher formed of the daily cipher, the time and an individual subscriber number or a collective subscriber number.

## Revendications

1. Procédé pour exécuter un trafic radio codé entre des postes émetteurs-récepteurs, et notamment des postes émetteurs-récepteurs mobiles, selon lequel tous les postes émetteurs-récepteurs constituant conjointement un réseau radioélectrique, utilisent les mêmes codes journaliers et opèrent d'une manière synchrone dans le temps, caractérisé par le fait que, dans le cas de l'utilisation d'un codage commandé en temps réel, les postes émetteurs-récepteurs utilisent pendant les périodes de repos ainsi que pendant l'établissement d'une liaison entre deux postes émetteurs-récepteurs, une période de changement du code temporel dans le mode de longue durée (code de longue durée Li), qui est égal à un multiple de la période de changement du code temporel dans le mode de brève durée (code de brève durée Kiv), utilisée lors de la transmission proprement dite de signaux utiles, qu'en outre, pour l'exécution de l'établissement d'une liaison, le poste appelant émet de façon répétée, entre deux changements du code de longue durée, une information d'appel (i,A), qui contient au moins une adresse d'appel (A) toujours codée de la même manière et qu'en outre également l'information de départ, qui achève l'établissement d'une liaison entre au moins deux postes émetteurs-récepteurs, est transmise également avec le code de longue durée, pour réaliser la commutation du code de longue durée (Li) sur le code de brève durée (Kiv).

2. Procédé suivant la revendication 1, caractérisé par le fait que la période de changement du code de longue durée (Li) est égale à un multiple entier de la période de changement du code de brève durée (Kiv).

3. Procédé suivant la revendication 1 ou 2, caractérisé par le fait que l'information d'appel (i,A) possède, en plus de l'adresse d'appel codée (A), également une information de temps (i).

4. Procédé suivant l'une des revendications précédentes, caractérisé par le fait que la période de répétition de l'information d'appel (i,A) est égale à la période de changement du code de brève durée (Kiv).

5. Procédé suivant l'une des revendications précédentes, caractérisé par le fait que le code de longue durée (Li) est en outre utilisé pour la transmission de courtes informations utiles par le fait qu'un autre code de longue durée est associé à chaque information utile de la suite de codes de longue durée (Li).

6. Procédé suivant l'une des revendications précédentes, caractérisé par le fait que l'adresse d'appel codée (A) est le code temporel formé à partir des codes journaliers, du temps, ainsi que d'un numéro d'abonné individuel ou d'un numéro collectif d'abonnés.

FIG 1

FIG 2

# FIG 3